# EUROPÄISCHE PATENTSCHRIFT

(11) **EP 2 086 807 B1**
(45) Veröffentlichungstag und Bekanntmachung des Hinweises auf die Patenterteilung: **23.06.2010**
(21) Anmeldenummer: 07820304.9
(22) Anmeldetag: 18.09.2007
(51) Int. Cl.: B60W 30/06, B60W 50/02, B60T 7/22, B60T 17/22, B60W 10/18, B60W 10/10

(54) **AUSFALLSICHERES PARKASSISTENZVERFAHREN UND PARKASSISTENZSYSTEM UND STEUERGERÄT**
FAILSAFE PARKING AID METHOD AND SYSTEM AND CONTROL UNIT
PROCÉDÉ ET SYSTÈME D'AIDE AU STATIONNEMENT À L'ÉPREUVE DES DÉFAILLANCES ET UNITÉ DE CONTRÔLE

(30) Priorität: 17.10.2006 DE 102006048910
(43) Veröffentlichungstag der Anmeldung: 12.08.2009
(73) Patentinhaber: Robert Bosch GmbH, 70442 Stuttgart (DE)
(72) Erfinder: NIJAKOWSKI, Klaus-Dieter, 74074 Heilbronn (DE); MESSNER, Heiner, 71706 Markgroeningen (DE)
(86) Internationale Anmeldenummer: PCT/EP2007/059851
(87) Internationale Veröffentlichungsnummer: WO 2008/046703

(56) Entgegenhaltungen:
- EP-A- 1 391 362
- WO-A-99/38738
- DE-A1- 10 006 682
- DE-A1- 19 826 687
- DE-A1-102005 046 017
- DE-C1- 10 006 656

## Beschreibung

### Stand der Technik

Die Erfindung betrifft ein Verfahren zum Absichern eines Parkassistenzsystems gegenüber Fehlern der Betriebs-Bremsanlage gemäß dem Oberbegriff des Patentanspruchs 1, sowie ein Parkassistenzsystem gemäß dem Oberbegriff des Patentanspruchs 4 bzw. ein Steuergerät gemäß dem Oberbegriff des Patentanspruchs 5.

Parkassistenzsysteme unterstützen den Fahrer eines Fahrzeugs beim Rangieren, insbesondere während eines Parkvorgangs. Dabei wird die Umgebung des Fahrzeugs mittels Sensoren abgetastet und das Fahrzeug automatisch abgebremst, wenn es sich einem anderen Objekt, wie z. B. einem parkenden Fahrzeug, zu stark nähert. Dadurch kann ein Auffahren auf das andere Objekt und eine Beschädigung des eigenen Fahrzeugs verhindert werden.

Bekannte Parkassistenzsysteme umfassen üblicherweise ein Steuergerät mit einem Algorithmus, Ultraschall-Sensoren zum Abtasten der Umgebung des Fahrzeugs und einen Aktuator der Bremsanlage, wie z.B. ein Hydroaggregat. Sobald das Fahrzeug einen Mindestabstand unterschritten hat, wird der Aktuator vom Steuergerät automatisch angesteuert und das Fahrzeug automatisch abgebremst.

Wenn nun bei einem Einparkvorgang die Bremsanlage ausfällt - beispielsweise wegen eines Fehlers am Bremsaktuator oder Bremsen-Steuergerät - wird das Fahrzeug nicht mehr automatisch abgebremst, so dass es zu einer Kollision mit einem anderen Objekt kommen kann.

Ein Verfahren gemäß dem Oberbegriff von Anspruch 1 ist aus der WO 99/38738 bekannt.

### Offenbarung der Erfindung

Es ist daher die Aufgabe der vorliegenden Erfindung, ein Parkassistenz-System gegenüber einem Ausfall der Betriebs-Bremsanlage abzusichern.

Gelöst wird diese Aufgabe gemäß der Erfindung durch die im Patentanspruch 1 sowie in Patentanspruch 4 bzw. 5 angegebenen Merkmale. Weitere Ausgestaltungen der Erfindung sind Gegenstand von Unteransprüchen.

Ein wesentlicher Aspekt der Erfindung besteht darin, die Funktion der Betriebs-Bremsanlage zu überwachen und, wenn ein Fehler festgestellt wird, das Fahrzeug mittels einer anderen Bremsvorrichtung zu bremsen und/oder die Übertragung der Antriebskraft des Motors auf die Räder zu unterbrechen. Dadurch kann eine Kollision mit umgebenden Objekten wirksam verhindert werden.

Gemäß der Erfindung wird das Automatikgetriebe dazu genutzt, die Kraftübertragung vom Fahrzeugmotor zu den Rädern zu unterbrechen. Bei einem Fehler der Betriebs-Bremsanlage wird die Getriebeposition-Wählvorrichtung angesteuert und der Leerlauf bzw. die neutrale Getriebeposition "N" eingelegt. Sofern das Bremsanlagen-Steuergerät funktionsfähig ist, überträgt es z. B. ein Steuersignal an das Getriebe-Steuergerät, das wiederum die Getriebeposition-Wählvorrichtung ansteuert. Bei Ausfall des Bremsanlagen-Steuergeräts wird vorzugsweise ein anderes Steuergerät, insbesondere das Getriebe-Steuergerät selbsttätig aktiv.

Gemäß einer bevorzugten Ausführungsform der Erfindung wird anstelle der Betriebs-Bremsanlage eine automatische Parkbremse genutzt, um das Fahrzeug abzubremsen. Hierzu wird der Aktuator der automatischen Parkbremse, wie z.B. ein so genannter "Cable puller" oder ein am Bremssattel befindlicher Elektromotor, angesteuert, um das Fahrzeug zu bremsen. Der automatische Bremseingriff kann entweder vom Steuergerät der Betriebs-Bremsanlage - sofern dieses funktioniert - oder von einem beliebigen anderen Steuergerät durchgeführt werden. Die Funktion des Bremsanlagen-Steuergeräts wird vorzugsweise von einem anderen Steuergerät überwacht, das in den Fahrbetrieb eingreift, wenn ersteres einen Fehler hat.

Die Funktion des Bremsanlagen-Steuergeräts wird vorzugsweise von wenigstens einem anderen Steuergerät ständig überwacht. Wenn ersteres ausfällt, wird das andere Steuergerät vorzugsweise selbsttätig aktiv und greift in den Fahrbetrieb ein. Die Steuergeräte stehen z. B. über einen Bus (z. B. CAN) miteinander in Verbindung.

Die vorstehend genannten Möglichkeiten zur Absicherung eines Parkassistenzsystems können auch in Kombination ausgeführt werden. So ist es beispielsweise möglich, sowohl die Übertragung der Antriebskraft auf die Räder zu unterbrechen als auch eine Bremsvorrichtung zu aktivieren, um in den Fahrbetrieb einzugreifen.

In Bezug auf die Bremsanlage wird vorzugsweise die Funktion des Hydroaggregats, insbesondere die Funktion der Förderpumpe(n), der Ventile und ggf. anderer Komponenten, als auch die Funktion des Bremsen-Steuergeräts überwacht.

### Kurze Beschreibung der Zeichnungen

Die Erfindung wird nachstehend anhand der beigefügten Zeichnungen beispielhaft näher erläutert. Es zeigen:
- Fig. 1: eine schematische Blockdarstellung eines Parkassistenzsystems, das ge- gen den Ausfall der Bremsanlage abgesichert ist; und
- Fig. 2: ein Flussdiagramm zur Darstellung der wesentlichen Verfahrensschritte eines Verfahrens zum Absichern eines automatisierten Parkvorgangs bei einem Fehler in der Bremsanlage.

### Ausführungsformen der Erfindung

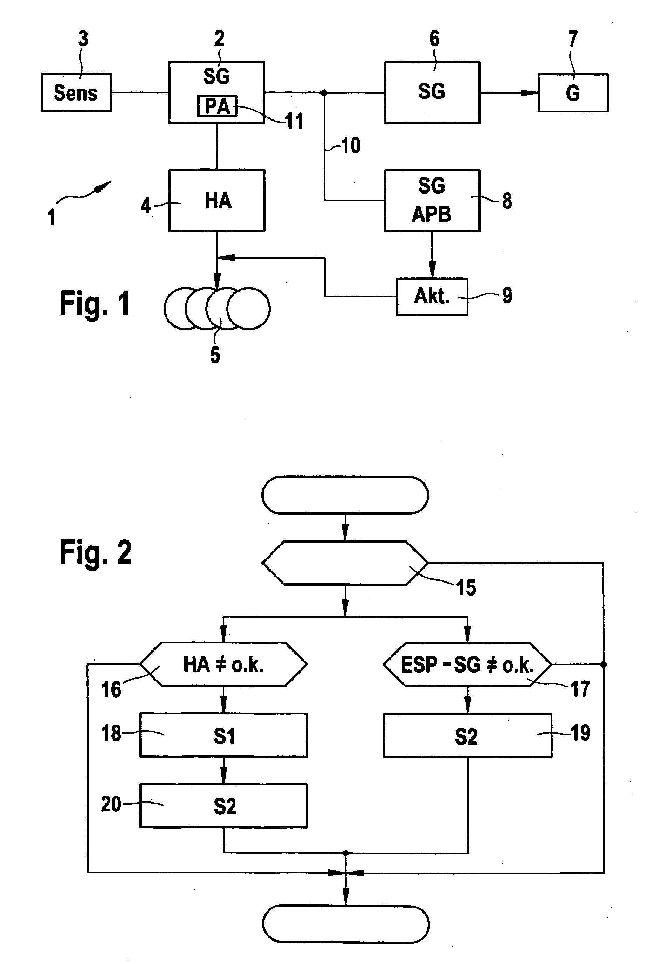

Fig. 1 zeigt eine schematische Blockdarstellung eines Parkassistenzsystems, das insgesamt mit dem Bezugszeichen 1 bezeichnet ist. Das Parkassistenzsystem umfasst im Wesentlichen ein Bremsen-Steuergerät 2 mit einem Parkassistenz-Algorithmus 11, ein Hydroaggregat 4 zum Modulieren der an den Radbremsen 5 wirkenden Bremskräfte, sowie die eigentlichen Radbremsen 5. Eine Umfeldsensorik 3, z. B. basierend auf Ultraschall, dient zum Abtasten der Umgebung.

Bei einem Parkvorgang, bei dem das Parkassistenzsystem aktiv ist, überwacht der Parkassistenz-Algorithmus 11 die Umgebung des Fahrzeugs in Bezug auf umliegende Objekte und greift mittels der Bremsanlage 4, 5 automatisch in den Fahrbetrieb ein, wenn sich das Fahrzeug einem anderen Objekt zu stark nähert. Der Parkassistenz-Algorithmus 11 ist hier im Bremsen-Steuergerät 2 vorgesehen, kann aber grundsätzlich auch in jedem anderen Steuergerät integriert sein.

Um für den Fall einer defekten Betriebs-Bremsanlage eine Kollision zu verhindern, ist das Parkassistenzsystem mit wenigstens einem anderen Fahrzeugsystem gekoppelt, mittels dessen das Fahrzeug entweder abgebremst oder die Übertragung der Antriebskraft auf die Rädern unterbrochen werden kann. Im vorliegenden Ausführungsbeispiel ist das Parkbrems-System 1 mit einem automatischen Getriebe 6, 7 und einer automatischen Parkbremse 8, 9 (APB) verbunden. Die Arbeitsweise dieses Gesamtsystems wird im Folgenden anhand von Fig. 2 näher erläutert.

Fig. 2 zeigt ein Flussdiagram eines Verfahrens zum Absichern eines Parkassistenzsystems 1 gegenüber einem Ausfall der Bremsanlage 2, 4, 5. Dabei wird in einem ersten Schritt 15 zunächst ermittelt, ob die Parkassistenz-Funktion aktiv ist. Falls ja (J), überwacht das Bremsen-Steuergerät 2 das Hydroaggregat 4 in Bezug auf Fehler (Schritt 16). Gleichzeitig erfolgt eine Überwachung des Bremsen-Steuergeräts 2 durch das Getriebe-Steuergerät 6 oder das Steuergerät 8 der automatischen Parkbremse (Schritt 17). Bei Vorliegen eines Fehlers am Hydroaggregat (Fall J in Schritt 16) sendet das Bremsen-Steuergerät 2 in Schritt 18 eine Stellanforderung an das Getriebe-Steuergerät 6 und/oder das APB-Steuergerät 8. Falls das Getriebe-Steuergerät 6 angesprochen wird, erzeugt es in Schritt 20 eine Anforderung an eine Getriebe-Wählvorrichtung 7, die Parkposition "P" oder die neutrale Position (Leerlauf) "N" einzustellen. Falls das APB-Steuergerät 8 angesprochen wird, erzeugt es ein Ansteuersignal für die Getriebe-Wählvorrichtung 7, die Parkposition "P" einzustellen und/oder ein Steuersignal für den Aktuator 9 der Parkbremse, um die Parkbremse anzuziehen und das Fahrzeug zu bremsen.

Wenn in Schritt 17 ein Fehler am Steuergerät 2 der Bremsanlage erkannt wird (Fall J), greift das Getriebe-Steuergerät 6 oder das Steuergerät 8 der automatischen Parkbremse selbst in den Fahrbetrieb ein. Das jeweilige Steuergerät 6 bzw. 8 erzeugt in diesem Fall in Schritt 19 einen Stellbefehl an die Getriebe-Wählvorrichtung 7 und/oder den Aktuator 9 der automatischen Parkbremse, um das Fahrzeug zu bremsen oder den Antriebsstrang zu unterbrechen. Eine mögliche Kollision kann somit wirksam verhindert werden.

Der Fahrer kann zusätzlich beispielsweise optisch oder akustisch über den Fehlerzustand informiert werden. Damit endet das Verfahren.

## Patentansprüche

1. Verfahren zum Absichern eines Parkassistenzsystem gegenüber einem Fehler der Betriebs-Bremsanlage (2, 4, 5), wobei die Funktion der Betriebs-Bremsanlage (2, 4, 5) überwacht und bei Vorliegen eines Fehlers ein Aktuator (9) eines anderen Fahrzeugsystems (6,7; 8,9) angesteuert wird, um das Fahrzeug zu bremsen und/oder die Übertragung von Antriebskraft auf die Räder des Fahrzeugs zu unterbrechen,
**dadurch gekennzeichnet, dass** bei Vorliegen eines Fehlers bei einem Fahrzeug mit Automatik-Getriebe (6, 7) eine Getriebeposition-Wählvorrichtung (7) angesteuert wird, um den Leerlauf "N" einzulegen und somit den Antriebsstrang zu unterbrechen.

2. Verfahren nach Anspruch 1, **dadurch gekennzeichnet, dass** bei einem Fahrzeug mit einer automatisierten Parkbremse (8, 9) ein Aktuator (9) der Parkbremse angesteuert wird, um diese anzuziehen.

3. Verfahren nach einem der vorhergehenden Ansprüche, **dadurch gekennzeichnet, dass** die Funktion des Steuergeräts (2) der Betriebs-Bremsanlage (2, 4, 5) überwacht wird.

4. Parkassistenzsystem (1), umfassend ein Steuergerät (2) mit einem Parkassistenz-Algorithmus (11), eine Sensorik (3) zum Abtasten der Umgebung des Fahrzeugs und einen Aktuator (4) der Betriebs-Bremsanlage, **dadurch gekennzeichnet, dass** das Parkassistenzsystem (1) Mittel umfasst, die zum Durchführen eines der vorstehend beschriebenen Verfahren ausgebildet sind.

5. Steuergerät, **gekennzeichnet durch** Mittel, die zum Durchführen eines der vorstehend beschriebenen Verfahren ausgebildet sind.

## Claims

1. Method for protecting a parking aid system against a fault in the service brake system (2, 4, 5), wherein the function of the service brake system (2, 4, 5) is monitored and an actuator (9) of another vehicle system (6, 7; 8, 9) is actuated when a fault is present in order to brake the vehicle and/or to interrupt the transmission of driving force to the wheels of the vehicle, **characterized in that** when a fault is present in a vehicle with an automatic transmission (6, 7) a transmission position selector device (7) is actuated in order to engage the "N" neutral position and therefore to interrupt the drivetrain.

2. Method according to Claim 1, **characterized in that** in a vehicle with an automated parking brake (8, 9) an actuator (9) of the parking brake is actuated in order to engage the said parking brake.

3. Method according to either of the preceding claims, **characterized in that** the function of the control unit (2) of the service brake system (2, 4, 5) is monitored.

4. Parking aid system (1), comprising a control unit (2) with a parking aid algorithm (11), a sensor system (3) for sensing the surroundings of the vehicle and an actuator (4) of the service brake system, **characterized in that** the parking aid system (1) comprises means which are designed to carry out one of the methods described above.

5. Control unit, **characterized by** means which are designed to carry out one of the methods described above.

## Revendications

1. Procédé de protection d'un système d'assistance au stationnement vis-à-vis de défaillances de l'installation (2, 4, 5) de freinage de service, dans lequel
le fonctionnement de l'installation (2, 4, 5) de freinage de service est surveillé et
en cas d'apparition d'une défaillance, un actionneur (9) d'un autre système (6, 7; 8, 9) du véhicule est activé pour freiner le véhicule et/ou interrompre la transmission de la force d'entraînement aux roues du véhicule,
**caractérisé en ce que**
en cas de présence d'une défaillance sur un véhicule doté d'une transmission automatique (6, 7), un dispositif (7) de sélection de la position de la transmission est activé pour passer en mode neutre "N" et ainsi rompre la chaîne d'entraînement.

2. Procédé selon la revendication 1, **caractérisé en ce que** dans le cas d'un véhicule doté d'un frein de stationnement (8, 9) automatisé, un actionneur (9) du frein de stationnement est activé pour serrer ce dernier.

3. Procédé selon l'une des revendications précédentes, **caractérisé en ce que** le fonctionnement de l'appareil de commande (2) de l'installation (2, 4, 5) de freinage de service est surveillé.

4. Système (1) d'assistance au stationnement comprenant
un appareil de commande (2) doté d'un algorithme (11) d'assistance au stationnement,
un ensemble (3) de détecteurs qui détectent l'environnement du véhicule et
un actionneur (4) de l'installation de freinage de service,
**caractérisé en ce que**
le système (1) d'assistance au stationnement comprend des moyens configurés pour exécuter l'un des procédés décrits plus haut.

5. Appareil de commande **caractérisé par** des moyens configurés pour exécuter l'un des procédés décrits plus haut.
